# EUROPEAN PATENT APPLICATION

(11) **EP 3 297 307 A1**
(43) Date of publication of application: **21.03.2018**
(21) Application number: 15895378.6
(22) Date of filing: 15.09.2015
(51) Int. Cl.: H04W 12/06, H04W 76/02

(54) **TERMINAL COMMUNICATION METHOD, DEVICE, CONTROL TERMINAL, AND CONTROLLED TERMINAL**

(30) Priority: 17.06.2015 CN 201510339078
(71) Applicant: ZTE Corporation, Shenzhen, Guangdong 518057 (CN)
(72) Inventor: HU, Yidong, Shenzhen Guangdong 518057 (CN)
(74) Representative: HGF Limited
(86) International application number: PCT/CN2015/089676
(87) International publication number: WO 2016/201805

(57) **Abstract**

The present invention provides a terminal communication method and device, a control terminal and a controlled terminal. Herein, the method includes: receiving an access request, directly sent by a controlled terminal, for requesting for access; establishing a connection with the controlled terminal according to the access request; and communicating with the controlled terminal according to the established connection. The present invention solves the problem that the control terminal cannot communicate with the controlled terminal under a situation that a background platform is abnormal in the related art, and thus achieves the effect that the control terminal and the controlled terminal can communicate with each other without the background platform.

## Description

### Technical Field

The present invention relates to the field of communication, in particular to a terminal communication method and device, a control terminal and a controlled terminal.

### Background

With the development of science and technology, terminals bring about more and more convenience to the life of people. In numerous applications of terminals, applications for positioning other terminals are favored by many guardians. Description will be made below by taking controlled terminal positioning as an example.

Controlled terminal positioning refers to a technique or a service for acquiring location information of a controlled terminal through a specific positioning technique and marking a location of a positioned object (i.e., controlled terminal) on an electronic map. One positioning technique is positioning based on a Global Position System (GPS), and a GPS-based positioning mode realizes mobile phone positioning by sending a location signal of the controlled terminal to a positioning background by using a GPS positioning module on a controlled terminal. Therefore, if other control terminals want to acquire the location information of the controlled terminal, information interaction with the background is needed to acquire the location information of the controlled terminal. Accordingly, it can be seen that the method for remotely positioning the controlled terminal by using the control terminal in the related art needs to use a background platform. If the background platform is abnormal, the control terminal cannot acquire the related information of the controlled terminal and thereby cannot normally communicate with the controlled terminal.

Up to now, no effective solution has already been put forward aiming at the problem that the control terminal cannot communicate with the controlled terminal under the situation that the background platform is abnormal in the related art.

### Summary

The present invention provides a terminal communication method and device, a control terminal and a controlled terminal, to at least solve the problem that a control terminal cannot communicate with a controlled terminal under a situation that a background platform is abnormal in the related art.

According to one aspect of the present invention, the present invention provides a terminal communication method, comprising: receiving an access request, directly sent by a controlled terminal, for requesting for access; establishing a connection with the controlled terminal according to the access request; and communicating with the controlled terminal according to the established connection.

In an exemplary embodiment, before the step of receiving an access request, directly sent by a controlled terminal, for requesting for access, the method further includes: directly sending a wake-up message for waking up the controlled terminal to the controlled terminal.

In an exemplary embodiment, the step of directly sending a wake-up message for waking up the controlled terminal to the controlled terminal includes: directly sending the wake-up message to the controlled terminal by means of sending a short message to the controlled terminal.

In an exemplary embodiment, the step of receiving an access request, directly sent by a controlled terminal, for requesting for access includes: receiving the access request directly sent by the controlled terminal by means of receiving a short message sent by the controlled terminal.

In an exemplary embodiment, the step of establishing a connection with the controlled terminal according to the access request includes: performing an authentication on the access request; under a situation that the authentication passes, sending an allowing message of allowing the access of the controlled terminal to the controlled terminal; and connecting the controlled terminal according to a message fed back by the controlled terminal to the allowing message.

In an exemplary embodiment, the step of communicating with the controlled terminal according to the established connection includes: receiving disassembly data sent by the controlled terminal, herein the disassembly data includes a state change type of the controlled terminal, time at which a state of the controlled terminal changes, and a place at which the state of the controlled terminal changes, and the state change type includes disassembly of the controlled terminal.

In an exemplary embodiment, after the step of communicating with the controlled terminal according to the established connection, the method further includes: storing received data sent by the controlled terminal in a platform, herein the platform is used for storing data.

According to another aspect of the present invention, the present invention provides a terminal communication method, comprising: directly sending an access request for accessing a control terminal to the control terminal; establishing a connection with the controlled terminal according to the access request; and communicating with the control terminal according to the established connection.

In an exemplary embodiment, before the step of directly sending an access request for accessing a control terminal to the control terminal, the method further includes: receiving a wake-up message directly sent by the control terminal; and entering a working state from a sleep state according to the wake-up message.

In an exemplary embodiment, the step of receiving a wake-up message directly sent by the control terminal includes: receiving the wake-up message directly sent by the control terminal by means of receiving a short message sent by the control terminal.

In an exemplary embodiment, the step of directly sending an access request for accessing a control terminal to the control terminal includes: directly sending the access request to the control terminal by means of sending a short message to the control terminal.

In an exemplary embodiment, the step of establishing a connection with the controlled terminal according to the access request includes: receiving an allowing message of allowing access sent by the control terminal according to the access request; performing an authentication on the allowing message; and under a situation that the authentication passes, accessing the control terminal.

In an exemplary embodiment, the step of communicating with the control terminal according to the established connection includes: when a disassembly signal is received, sending disassembly data to the control terminal, herein the disassembly data includes a state change type, time at which a state changes and a place at which the state changes, and the state change type includes disassembly of a controlled terminal.

According to another aspect of the present invention, the present invention provides a terminal communication device, comprising: a first receiving module configured to receive an access request, directly sent by a controlled terminal, for requesting for access; a first establishment module configured to establish a connection with the controlled terminal according to the access request; and a first communication module configured to communicate with the controlled terminal according to the established connection.

In an exemplary embodiment, the device further includes: a first sending module configured to directly send a wake-up message for waking up the controlled terminal to the controlled terminal.

In an exemplary embodiment, the first sending module is configured to directly send the wake-up message to the controlled terminal by means of sending a short message to the controlled terminal.

In an exemplary embodiment, the first receiving module is configured to receive the access request directly sent by the controlled terminal by means of receiving a short message sent by the controlled terminal.

In an exemplary embodiment, the device further includes: a storage module configured to store the received data sent by the controlled terminal in a platform, herein the platform is used for storing data.

According to another aspect of the present invention, the present invention provides a control terminal, comprising any one of the above devices.

According to another aspect of the present invention, the present invention provides a terminal communication device, comprising: a second sending module configured to directly send an access request for accessing a control terminal to the control terminal; a second establishment module configured to establish a connection with the controlled terminal according to the access request; and a second communication module configured to communicate with the control terminal according to the established connection.

In an exemplary embodiment, the device further includes: a second receiving module configured to receive a wake-up message directly sent by the control terminal; and a processing module configured to enter a working state from a sleep state according to the wake-up message.

In an exemplary embodiment, the second receiving module is configured to receive the wake-up message directly sent by the control terminal by means of receiving a short message sent by the control terminal.

In an exemplary embodiment, the second sending module is configured to directly send the access request to the control terminal by means of sending a short message to the control terminal.

According to another aspect of the present invention, the present invention provides a controlled terminal comprising any one of the above devices.

In an exemplary embodiment, a voice button and/or a disassembly button are/is further provided in the controlled terminal, herein the voice button is embedded into a core of the controlled terminal and engages with a key of the core of the controlled terminal, and the disassembly button is located between a shell of the controlled terminal and the core of the controlled terminal.

In the present invention, an access request, directly sent by a controlled terminal, for requesting for access is received; a connection with the controlled terminal is established according to the access request; and communication with the controlled terminal is performed according to the established connection. Therefore, the present invention solves the problem that the control terminal cannot communicate with the controlled terminal under a situation that the background platform is abnormal in the related art, and thus achieves the effect that the control terminal and the controlled terminal can communicate with each other without the background platform.

### Brief Description of Drawings

The drawings described here are used for providing further understanding about the present invention, and constitute a part of the present application. The exemplary embodiments of the present invention and the description thereof are used for explaining the present invention instead of improperly limiting the present invention. In the drawings:
FIG. 1 illustrates a flowchart of a first terminal communication method according to an embodiment of the present invention.
FIG. 2 illustrates a flowchart of a second terminal communication method according to an embodiment of the present invention.
FIG. 3 illustrates a structural diagram of a first terminal communication device according to an embodiment of the present invention.
FIG. 4 illustrates an alternative structural diagram one of a first terminal communication device according to an embodiment of the present invention.
FIG. 5 illustrates an alternative structural diagram two of a first terminal communication device according to an embodiment of the present invention.
FIG. 6 illustrates a structural diagram of a control terminal according to an embodiment of the present invention.
FIG. 7 illustrates a structural diagram of a second terminal communication device according to an embodiment of the present invention.
FIG. 8 illustrates an alternative structural diagram of a second terminal communication device according to an embodiment of the present invention.
FIG. 9 illustrates a structural diagram of a controlled terminal according to an embodiment of the present invention.
FIG. 10 illustrates a system architecture diagram according to an embodiment of the present invention.
FIG. 11 illustrates a design diagram of a controlled terminal according to an embodiment of the present invention.
FIG. 12 illustrates a terminal interaction flowchart when a control terminal initiates a wake-up process according to an embodiment of the present invention.
FIG. 13 illustrates a terminal interaction flowchart when a controlled terminal initiates a wake-up process according to an embodiment of the present invention.
FIG. 14 illustrates a controlled terminal disassembly notification flowchart according to an embodiment of the present invention.
FIG. 15 illustrates a flowchart of a terminal control method according to an embodiment of the present invention.

### Detailed Description

The present invention will be described below in detail with reference to the drawings in combination with the embodiments. It needs to be stated that the embodiments in the present application and the features in the embodiments may be mutually combined under a situation of no conflict.

It needs to be stated that terms such as "first" and "second" in the description, the claims and the drawings of the present invention are used for distinguishing similar objects instead of necessarily describing specific orders or sequences.

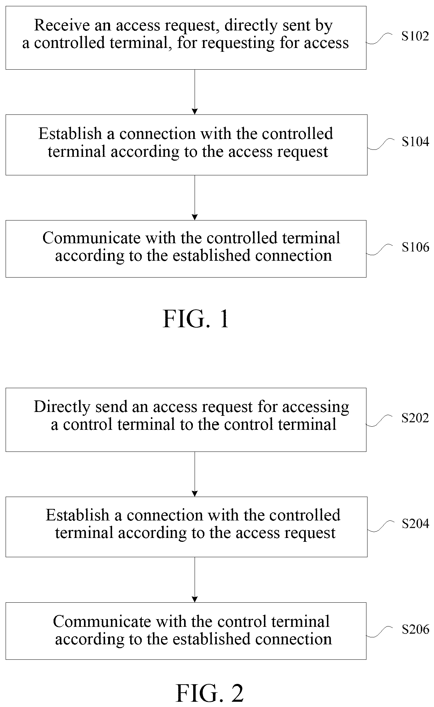

This embodiment provides a terminal communication method. FIG. 1 illustrates a flowchart of a first terminal communication method according to the embodiment of the present invention. As illustrated in FIG. 1, the process of the first terminal communication method includes the following steps.

In step S102, an access request directly sent by a controlled terminal for requesting for access is received.

In step S104, a connection with the controlled terminal is established according to the access request.

In step S106, communication with the controlled terminal is performed according to the established connection.

Herein, the device which executes the above-mentioned operation may be a control terminal, and of course, may also be other devices. Description is made below by taking the control terminal as an example. Through the above-mentioned steps, when the controlled terminal needs to access the control terminal, the control terminal may directly receive the access request sent by the controlled terminal. In other words, the access request may be directly sent by the controlled terminal to the control terminal and does not need to be sent to the control terminal by taking a background platform as a sending intermediate. After the controlled terminal accesses the control terminal, the control terminal may acquire the related information (such as location information) of the controlled terminal and information which needs to be sent by the controlled terminal to the control terminal, thereby solving the problem that the control terminal cannot communicate with the controlled terminal under a situation that a background platform is abnormal in the related art, and thus achieving the effect that the control terminal and the controlled terminal can communicate with each other without the background platform.

In one alternative embodiment, before the step that the access request directly sent by the controlled terminal for requesting for access is received, the method further includes: a wake-up message for waking up the controlled terminal is directly sent to the controlled terminal. That is, when the control terminal needs to communicate with the controlled terminal, the controlled terminal is possibly in a sleep state and the controlled terminal needs to be woken up at this moment. According to the method in this embodiment, the control terminal can directly send a wake-up message to the controlled terminal to wake up the controlled terminal without the background platform.

In an exemplary embodiment, the step that the wake-up message for waking up the controlled terminal is directly sent to the controlled terminal includes: the wake-up message is directly sent to the controlled terminal by means of sending a short message to the controlled terminal. That is, the controlled terminal is woken up by sending a point-to-point short message.

In an exemplary embodiment, the step that the access request directly sent by the controlled terminal for requesting for access is received includes: the access request directly sent by the controlled terminal is received by means of receiving a short message sent by the controlled terminal. That is, the access request of the controlled terminal is received by sending a point-to-point short message.

In an exemplary embodiment, the step that the connection with the controlled terminal is established according to the access request includes: performing an authentication on the access request; under a situation that the authentication passes, sending an allowing message of allowing the access of the controlled terminal to the controlled terminal; and connecting the controlled terminal according to a message fed back by the controlled terminal to the allowing message.

In an exemplary embodiment, the step that communication with the controlled terminal is performed according to the established connection includes: receiving disassembly data sent by the controlled terminal. Herein, the disassembly data includes a state change type of the controlled terminal, time at which a state of the controlled terminal changes and a place at which the state of the controlled terminal changes. And the state change type includes disassembly of the controlled terminal. That is, when the controlled terminal is disassembled for certain reasons, the controlled terminal will send disassembly data to the control terminal such that the control terminal knows the state of the controlled terminal at any time.

When the control terminal and the controlled terminal communicate, the control terminal will receive some data sent by the controlled terminal. After the control terminal receives these data, the control terminal may select to store these data, and storage positions may be various. For example, the data may be stored in the control terminal. Since the storage space of the control terminal is comparatively limited, these data may also be selectively stored in a storage platform. In one alternative embodiment, after the step that communication with the controlled terminal is performed according to the established connection, the method further includes: storing the received data sent by the controlled terminal in a platform, herein the platform is used for storing data.

FIG. 2 illustrates a flowchart of a second terminal communication method according to an embodiment of the present invention. As illustrated in FIG. 2, the process of the second terminal communication method includes the following steps.

In step S202, an access request for accessing a control terminal is directly sent to the control terminal.

In step S204, a connection with the controlled terminal is established according to the access request.

In step S206, communication with the control terminal is performed according to the established connection.

Herein, the device which executes the above-mentioned operation may be a controlled terminal, and of course, may also be other devices. Description is made below by taking the controlled terminal as an example. Through the above-mentioned steps, when the controlled terminal needs to access the control terminal, the controlled terminal may directly send the access request to the control terminal. In other words, the access request may be directly sent by the controlled terminal to the control terminal and does not need to be sent to the control terminal by taking a background platform as a sending intermediate. After the controlled terminal accesses the control terminal, the control terminal can acquire the related information (such as location information) of the controlled terminal and information which needs to be sent by the controlled terminal to the control terminal, thereby solving the problem that the control terminal cannot communicate with the controlled terminal under a situation that a background platform is abnormal in the related art, and thus achieving the effect that the control terminal and the controlled terminal can communicate with each other without the background platform.

In one alternative embodiment, before the step that the access request for accessing the control terminal is directly sent to the control terminal, the method further includes: a wake-up message directly sent by the control terminal is received; and the controlled terminal enters a working state from a sleep state according to the wake-up message. In other words, when the controlled terminal does not communicate with the control terminal, the controlled terminal may enter a sleep state to save electricity. After the controlled terminal receives the wake-up message of the control terminal, the controlled terminal enters the working state from the sleep state. Of course, the mode that the controlled terminal enters the working state from the sleep state may also be other modes. For example, when the controlled terminal needs to communicate with the control terminal, the controlled terminal may autonomously enter the working state. Thereby, the problems that the terminal needs to be woken up by the background platform after the terminal is sleep, and the wake-up mode is single and the terminal cannot be used when the background platform is abnormal in the related art are solved.

In an exemplary embodiment, the step that the wake-up message directly sent by the control terminal is received includes: the wake-up message directly sent by the control terminal is received by means of receiving a short message sent by the control terminal. That is, the control terminal may send the wake-up message by means of sending a point-to-point short message.

In an exemplary embodiment, the step that the access request for accessing the control terminal is directly sent to the control terminal includes: the access request is directly sent to the control terminal by means of sending a short message to the control terminal. That is, the controlled terminal may send the access request to the control terminal by means of sending a point-to-point short message.

In an exemplary embodiment, the step that the connection with the controlled terminal is established according to the access request includes: receiving an allowing message of allowing access sent by the control terminal according to the access request; performing an authentication on the allowing message; and under a situation that the authentication passes, accessing the control terminal.

In an exemplary embodiment, the step that communication with the control terminal is performed according to the established connection includes: when a disassembly signal is received, disassembly data are sent to the control terminal. Herein, the disassembly data includes a state change type, time at which a state changes and a place at which the state changes. And the state change type includes disassembly of a controlled terminal. That is, when the controlled terminal is disassembled for certain reasons, the controlled terminal will send disassembly data to the control terminal such that the control terminal knows the state of the controlled terminal at any time.

Through the description of the above-mentioned implementation modes, one skilled in the art may clearly know that the methods according to the above-mentioned embodiments may be implemented by means of software plus a necessary general-purpose hardware platform. Of course, the methods may also be implemented by means of hardware. However, under many situations, the former is a more preferred implementation mode. Based on such understanding, the technical solution of the present invention substantively or the part which makes a contribution to the existing art of the present invention may be reflected in the form of a software product, and the computer software product is stored in a storage medium (such as an ROM/RAM, a magnetic disk or a compact disk) and includes a plurality of instructions used for enabling one terminal device (which may be a mobile phone, a computer, a server or a network device or the like) to implement the method according to each embodiment of the present invention.

An embodiment further provides a terminal communication device. The device is used for implementing the above-mentioned embodiments and alternative implementation modes, and thus the content which has already been described is not repetitively described here. As used below, the term "module" may realize a combination of software and/or hardware with predetermined functions. Although the device described in the following embodiments is preferably implemented by means of software, the implementation by means of hardware or the combination of software and hardware is also possible and may be conceived.

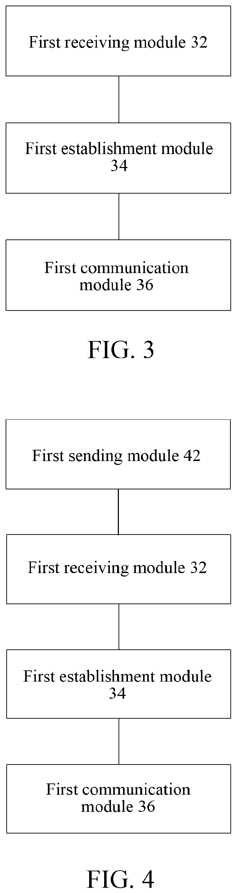

FIG. 3 illustrates a structural diagram of a first terminal communication device according to an embodiment of the present invention. As illustrated in FIG. 3, the device includes a first receiving module 32, a first establishment module 34 and a first communication module 36. The device will be described below.

The first receiving module 32 is configured to receive an access request, directly sent by a controlled terminal, for requesting for access. The first establishment module 34 connected to the first receiving module 32 is configured to establish a connection with the controlled terminal according to the access request. The first communication module 36 connected to the first establishment module 34 is configured to communicate with the controlled terminal according to the established connection.

FIG. 4 illustrates an alternative structural diagram one of a first terminal communication device according to an embodiment of the present invention. As illustrated in FIG. 4, in addition to all modules illustrated in FIG. 3, the device further includes a first sending module 42. The device will be described below.

The first sending module 42 connected to the first receiving module 32 is configured to directly send a wake-up message for waking up the controlled terminal to the controlled terminal.

In an exemplary embodiment, the first sending module 42 is configured to directly send the wake-up message to the controlled terminal by means of sending a short message to the controlled terminal.

In an exemplary embodiment, the first receiving module 32 is configured to receive the access request directly sent by the controlled terminal by means of receiving a short message sent by the controlled terminal.

In an exemplary embodiment, the first establishment module 34 is configured to perform an authentication on the access request; under a situation that the authentication passes, send an allowing message of allowing the access of the controlled terminal to the controlled terminal; and connect the controlled terminal according to a message fed back by the controlled terminal to the allowing message.

In an exemplary embodiment, the first communication module 36 is configured to receive disassembly data sent by the controlled terminal. Herein, the disassembly data includes a state change type of the controlled terminal, time at which a state of the controlled terminal changes and a place at which the state of the controlled terminal changes, and the state change type includes disassembly of the controlled terminal. That is, when the controlled terminal is disassembled for certain reasons, the controlled terminal will send disassembly data to the control terminal such that the control terminal knows the state of the controlled terminal at any time.

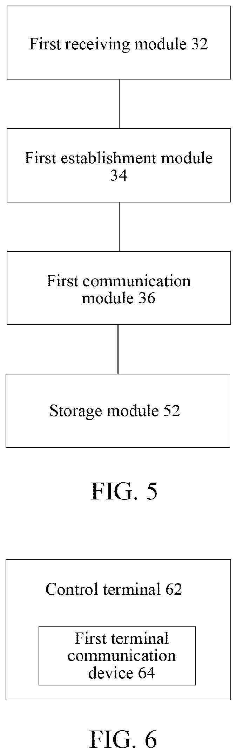

FIG. 5 illustrates an alternative structural diagram two of a first terminal communication device according to an embodiment of the present invention. As illustrated in FIG. 5, in addition to all modules illustrated in FIG. 3, the device further includes a storage module 52. The device will be described below.

The storage module 52 connected to the first communication module 36 is configured to store the received data sent by the controlled terminal in a platform. Herein, the platform is used for storing data.

FIG. 6 illustrates a structural diagram of a control terminal according to an embodiment of the present invention. As illustrated in FIG. 6, the control terminal 62 includes any one of the above first terminal communication devices 64.

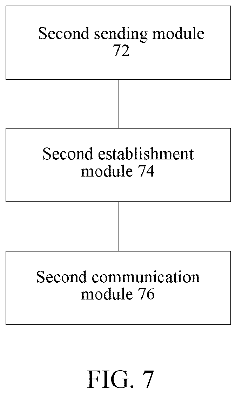

FIG. 7 illustrates a structural diagram of a second terminal communication device according to an embodiment of the present invention. As illustrated in FIG. 7, the device includes a second sending module 72, a second establishment module 74 and a second communication module 76. The device will be described below.

The second sending module 72 is configured to directly send an access request for accessing a control terminal to the control terminal. The second establishment module 74 connected to the second sending module 72 is configured to establish a connection with the controlled terminal according to the access request. And the second communication module 76 connected to the second establishment module 74 is configured to communicate with the control terminal according to the established connection.

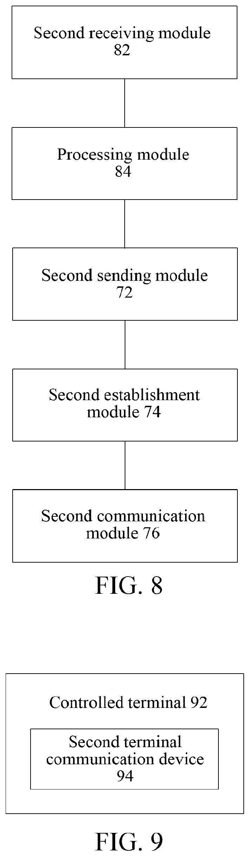

FIG. 8 illustrates an alternative structural diagram of a second terminal communication device according to an embodiment of the present invention. As illustrated in FIG. 8, in addition to all modules illustrated in FIG. 7, the device further includes a second receiving module 82 and a processing module 84. The device will be described below.

The second receiving module 82 is configured to receive a wake-up message directly sent by the control terminal. The processing module 84 connected to the second sending module 72 is configured to enter a working state from a sleep state according to the wake-up message.

In an exemplary embodiment, the second receiving module 82 is configured to receive the wake-up message directly sent by the control terminal by means of receiving a short message sent by the control terminal.

In an exemplary embodiment, the second sending module 72 is configured to directly send the access request to the control terminal by means of sending a short message to the control terminal.

FIG. 9 illustrates a structural diagram of a controlled terminal according to an embodiment of the present invention. As illustrated in FIG. 9, the controlled terminal 92 includes any one of the above second terminal communication devices 94.

In an exemplary embodiment, a voice button and/or a disassembly button are/is further provided in the controlled terminal. Herein, the voice button is embedded into a core of the controlled terminal and engages with a key of the core of the controlled terminal, and the disassembly button is located between a shell of the controlled terminal and the core of the controlled terminal.

From the above-mentioned embodiments, it can be seen that, even under the situation that there is no background platform, the control terminal may also be used (Application (APP for short) installed on the control terminal may be used) for remotely positioning the controlled terminal and making a voice call with the controlled terminal; and different demands of users are satisfied, and different services and various networking modes are provided. The controlled terminal in this embodiment of the present invention supports a voice play control function. That is, the user of the controlled terminal may turn on or off the voice function according to actual situations.

The present invention will be continuously described below in combination with the embodiments.

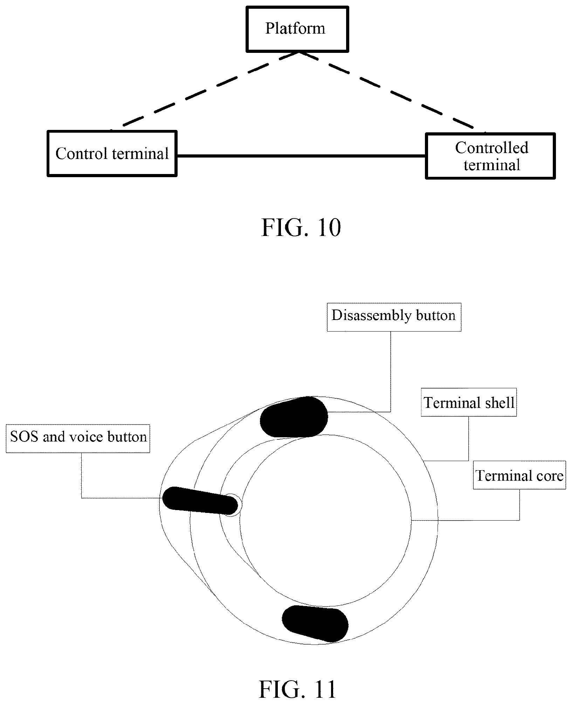

A terminal communication system in the embodiment of the present invention may include a control terminal and a controlled terminal, and may further include a platform (the same as the above-mentioned background platform) according to actual situations. A reference may be made to FIG. 10, which illustrates a system architecture diagram according to an embodiment of the present invention.

The control terminal provides capabilities of remotely operating the controlled terminal, including performing remote positioning, performing voice communication, performing an authentication on the access of the controlled terminal, caching and viewing data of the controlled terminal, and viewing historical data of the controlled terminal stored in the platform.

The controlled terminal can realize positioning, voice communication, authentication for an access of the control terminal, voice play manual setting, key-pressing automatic wake-up, automatic sleep in idle state, and remote access to the platform and the control terminal.

The platform receives, stores and forwards instructions and data of the control terminal, receives, stores and forwards data of the controlled terminal, stores data of the controlled terminal, manages access authentication of the control terminal and the controlled terminal, and provides more services.

The control terminal in FIG. 10 may be a smart phone installed with APP for controlling the controlled terminal, and may also be a proprietary control terminal device, and the control terminal logs in by adopting local authentication; the controlled terminal may be a smart phone installed with APP for accessing the control terminal, and may also be a proprietary monitoring device. And the platform is an optional module. If the platform is provided, the control terminal and the controlled terminal can be centrally managed and more services can be provided. If the platform is not provided, the control terminal and the controlled terminal directly communicate with each other.

In the embodiment of the present invention, there are three flexible networking modes available for the control terminal, the controlled terminal and the platform.
Mode 1: the platform is used as a central management platform, and the platform is a service end and is connected with the control terminal and the controlled terminal, and all instructions and data are managed and forwarded at the platform, expressed by dashed lines in FIG. 10.
Mode 2: the platform is used as a data storage center, and the platform is used as a service end and is connected with the control terminal and the platform is not connected with the controlled terminal. All instructions and data are directly communicated between the control terminal and the controlled terminal, and the data are forwarded to the platform for storage after the data of the controlled terminal are received by the control terminal, and the control terminal queries historical data of the controlled terminal through the platform.
Mode 3: the platform is not usable, the control terminal directly communicates with the controlled terminal and data are directly cached in the control terminal. The control terminal may cache the data of the controlled terminal within a certain period according to the size of the storage space of the control terminal. The data stored in the control terminal may be stored by adopting an encrypted file, the encrypted file can be open only by using the controlled terminal or the smart terminal APP, and the control terminal must be firstly logged in when the encrypted file is opened at the control terminal.

FIG. 11 illustrates a design diagram of a controlled terminal according to an embodiment of the present invention. From FIG. 11, it can be seen that the controlled terminal is divided into two major parts, i.e., a terminal shell and a terminal core. The terminal shell and the core adopt a circular design (circular design is just an example and designs of other shapes such as elliptical shape and rectangular shape may also be adopted), and other objects may be embedded into the shell to form different types of terminals.

An SOS voice button is provided on the shell of the controlled terminal, and this button goes deep into the core of the controlled terminal and engages with the key of the core.

A disassembly button is mounted between the shell of the controlled terminal and the core of the controlled terminal, and the disassembly notification function of the core is triggered by pressing hard the disassembly button. The position of the disassembly button may be randomly adjusted according to the shape (such as watchband) of the shell of the controlled terminal.

To reduce the size of the controlled terminal, the shell of the controlled terminal may be not needed, and the SOS voice function and the voice control function of the controlled terminal can also be provided by directly using the core of the terminal, but the disassembly notification function cannot be provided.

The control functions of the SOS voice control button are as follows.
1) When this button is pressed for long time, the controlled terminal triggers an SOS emergency voice call function.
2) The voice state of the controlled terminal is turned on under a normal situation, i.e., the controlled terminal can play voice information. The voice function of the controlled terminal may be turned off when this button is pressed for a single time in a call, and the voice function is turned on when this button is pressed again for a single time. The controlled terminal is in a normal play state again after the call is ended.
3) When the controlled terminal is in an idle state and this button is pressed for two continuous times, voice may be recorded, and when this button is pressed again for a single time, recording is ended and the recorded voice is sent. It takes no effect when this button is pressed for a single time when the controlled terminal is in an idle state.
4) When the controlled terminal is in a recording state and this button is pressed for two continuous times, recording is turned off; and when the controlled terminal is in an idle state and this button is pressed for two continuous times again, the terminal starts recording again.

The terminal communication method in the embodiment of the present invention may include the following steps.

In step 1, when a control terminal and a controlled terminal are used, respective service IP (Internet Protocol) addresses are automatically acquired, and the platform IP address is a fixed public network address; and a mobile communication SIM (Subscriber Identity Module) card may be integrated in each of the control terminal and the controlled terminal.

In step 2, the controlled terminal keeps communications with the platform and the control terminal during working, and automatically becomes sleep when no information is transmitted in links and the controlled terminal is idle for certain time.

In step 3, when the control terminal remotely operates the controlled terminal, the control terminal sends an instruction to the platform, the platform then wakes up the controlled terminal and the control terminal communicates with the controlled terminal through the platform.

In step 4, when the control terminal remotely operates the controlled terminal and the control terminal is not connected with the platform, the control terminal sends an access short message to a number corresponding to the SIM of the controlled terminal, and the controlled terminal is woken up and accesses the control terminal after the controlled terminal receives the short message.

In step 5, after the controlled terminal is woken up, the controlled terminal sends an access request to the access address before sleeping, a short message is sent to an SIM card number corresponding to the control terminal if the access fails, and the control terminal connects and communicates with the controlled terminal according to the short message.

The above-mentioned steps will be described below.

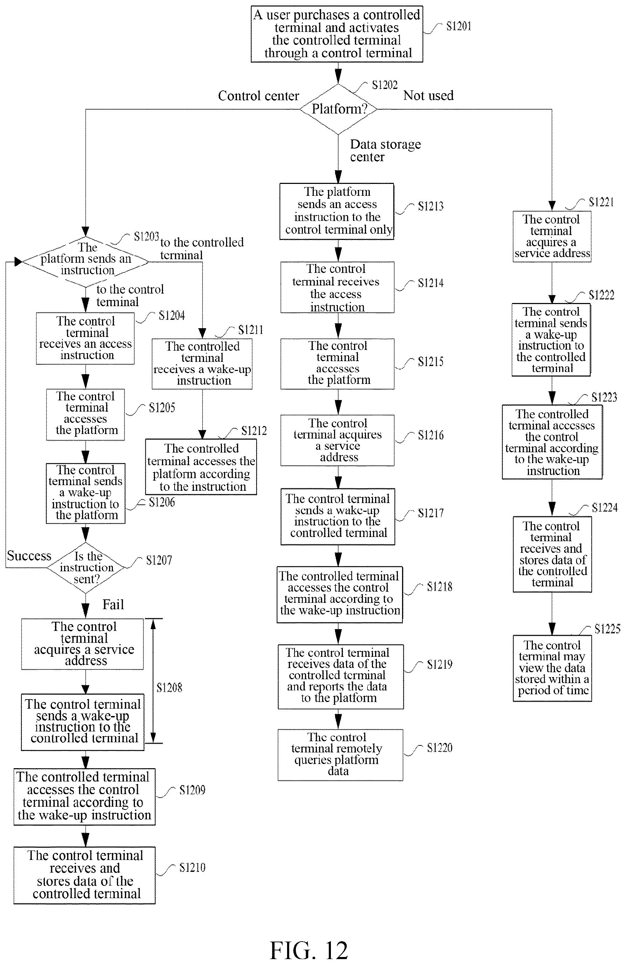

FIG. 12 illustrates a terminal interaction flowchart when a control terminal initiates a wake-up process according to an embodiment of the present invention. As illustrated in FIG. 12, the process includes the following steps.

In step S1201, a user purchases a controlled terminal and activates the controlled terminal through a control terminal.

In step S1202, a use type of a platform is judged according to a purchased service; when the platform is set as a control center, step S1203 will be executed; when the platform is set as a data storage center, step S1213 will be executed; and when the platform is not used, step S1221 will be executed.

In step S1203, the platform firstly sends an activation instruction to the control terminal and the controlled terminal; when the platform sends an access activation instruction to the control terminal, step S1204 will be executed; and when the platform sends an activation instruction to the controlled terminal, step S1211 will be executed.

In step S1204, the control terminal receives the activation instruction and acquires service address information and authentication information in the instruction message; when the control terminal performs an authentication on the instruction of the platform and the authentication passes, step S1205 will be executed; and when the authentication fails, the instruction message is directly abandoned.

In step S1205, the control terminal initiates an access request to the service address, herein the request message carries authentication information; when the platform authentication passes, the control terminal is allowed to access and step S1206 will be executed; and when the platform authentication fails, the request message is directly abandoned and the control terminal is not allowed to access.

In step S1206, the control terminal sends a controlled terminal operation instruction to the platform.

In step S1207, whether the instruction is successfully sent is judged; when it is failed to send the controlled terminal operation instruction to the platform, step S1208 will be executed; when it is successful to send the controlled terminal operation instruction to the platform, step S1203 will be executed. The controlled terminal operation instruction is sent to the controlled terminal through the platform, and after the platform receives the instruction, if the controlled terminal is not online, the platform directly sends a wake-up instruction to the controlled terminal designated by the instruction and caches the instruction; and if the controlled terminal is online, the platform directly sends the operation instruction to the controlled terminal designated by the instruction, and the controlled terminal does not need to be woken up.

In step S1208, the control terminal acquires the service address and sends a wake-up instruction to the controlled terminal, and step S1209 will be executed.

In step S1209, the controlled terminal receives the wake-up instruction sent by the control terminal, an access request is initiated to the service address in the instruction after the authentication passes, and step S1210 will be executed.

In step S1210, the control terminal performs an authentication on the access request of the controlled terminal and the authentication passes, and then the control terminal communicates with the controlled terminal and stores data reported by the controlled terminal, and the process is ended.

In step S1211, the controlled terminal receives an activation or wake-up instruction sent by the platform and authentication is performed on the instruction of the platform; when the authentication passes, the platform is accessed and then step S1212 will be executed; and when the authentication fails, the instruction message is directly abandoned.

In step S1212, the controlled terminal accesses the platform according to the received instruction, after the platform finds that the controlled terminal has accessed, the platform sends the operation instruction sent by the control terminal to the controlled terminal, and the wake-up process is ended hereto.

In step S1213, the platform sends an access instruction to the control terminal only and step S1214 will be executed.

In step S1214, the control terminal receives the access instruction, performs an authentication on the access instruction, and after the authentication passes, the control terminal initiates an access request to the platform according to the instruction, step S1215 will be executed.

In step S1215, the platform receives the access request and the authentication passes, the control terminal is allowed to access, and step S1216 will be executed.

In step S1216, the control terminal acquires a service address.

In step S1217, the control terminal sends a wake-up instruction to the controlled terminal.

In step S1218, the controlled terminal performs an authentication on the wake-up instruction, and after the authentication passes, the access request is initiated according to an address of the wake-up instruction, and step S1219 will be executed.

In step S1219, the control terminal receives the access request of the controlled terminal and performs an authentication; and when the authentication passes, the control terminal and the controlled terminal perform data communication, the control terminal simultaneously uploads the data of the controlled terminal to the platform, and step S1220 will be executed.

In step S1220, the control terminal remotely views the terminal historical data stored in the platform and the process is ended.

In step S1221, the control terminal directly acquires a service address.

In step S1222, the control terminal sends a wake-up instruction to the controlled terminal.

In step S1223, the controlled terminal receives the instruction, the authentication passes and an access request is initiated to the control terminal according to the instruction.

In step S1224, the control terminal receives the access request of the controlled terminal, and after the authentication passes, the control terminal communicates with the controlled terminal and the control terminal caches the data of the controlled terminal.

In step S1225, the control terminal can view the data stored within a period and the process is ended.

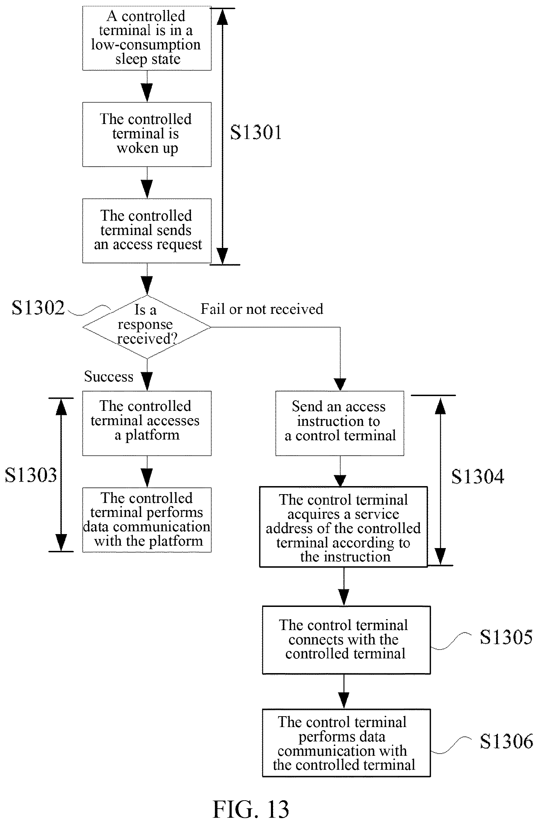

FIG. 13 illustrates a terminal interaction flowchart when a controlled terminal initiates a wake-up process according to an embodiment of the present invention. The controlled terminal is always in a sleep state when the controlled terminal is in a non-working state, and at this moment the controlled terminal only guarantees a basic signaling link to save electricity. The controlled terminal may be woken up manually or at regular time from the controlled terminal side, and the process after the controlled terminal is woken up is as follow.

In step S1301, when a controlled terminal is not woken up, the controlled terminal is in a sleep state; and when the controlled terminal is woken up, the controlled terminal acquires an access address before sleeping and sends an access request to the address, and step S1302 will be executed.

In step S1302, the controlled terminal receives a response message and performs authentication processing on the response message; when the authentication on the response message passes, step S1303 will be executed; and when the authentication on the response message fails or no response is received, step S1304 will be executed.

In step S1303, a platform allows the controlled terminal to access, the platform communicates with the controlled terminal and the process is ended.

In step S1304, the controlled terminal acquires a service address thereof and sends an access message to a control terminal. Herein, the message carries information about the controlled terminal, and step S1305 will be executed.

In step S1305, the control terminal receives the access message and performs an authentication on the access message; if the authentication passes, the information about the service address of the controlled terminal is acquired, an access request is sent to the controlled terminal and step S1306 will be executed; and if the authentication fails, the access message is directly abandoned.

In step S1306, the controlled terminal receives the access request of the control terminal and performs an authentication on the access request; if the authentication passes, data communication is performed and the process is ended; and if the authentication fails, the access request message is abandoned and the access is not allowed.

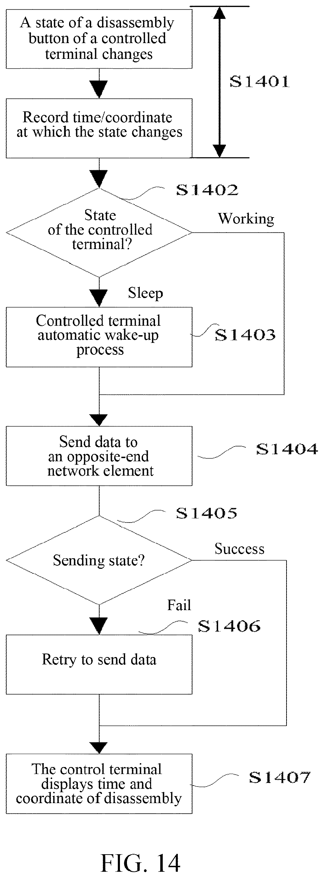

FIG. 14 illustrates a controlled terminal disassembly notification flowchart according to an embodiment of the present invention. In the embodiment of the present invention, the controlled terminal may provide an anti-disassembly function, and the anti-disassembly function of the controlled terminal will be triggered when the user disassembles the controlled terminal. A specific anti-disassembly processing is as follow.

In step S1401, pressure of an anti-disassembly button of a controlled terminal changes obviously, such that an anti-disassembly state change is produced, the controlled terminal records information such as time at which the state changes and geographical coordinates, and step S1402 will be executed.

In step S1402, the controlled terminal self-checks the state; when the controlled terminal is in a sleep state, step S1403 will be executed; and when the controlled terminal is in a working state, step S1404 will be executed.

In step S1403, the controlled terminal is automatically woken up and enters a controlled terminal wake-up process, the controlled terminal successfully communicates with the control terminal and step S1404 will be executed.

In step S1404, disassembly data are sent to the control terminal (the same as an opposite-end network element) through a data network.

In step S1405, a sending state of the disassembly data is judged; when the sending of the disassembly data successes, step S1407 will be executed; and when the sending fails, step S1406 will be executed.

In step S1406, the controlled terminal caches the data, and retries to send disassembly data to the control terminal according to a preset policy, and step S1407 will be executed.

In step S1407, the control terminal receives the disassembly data for use of the user.

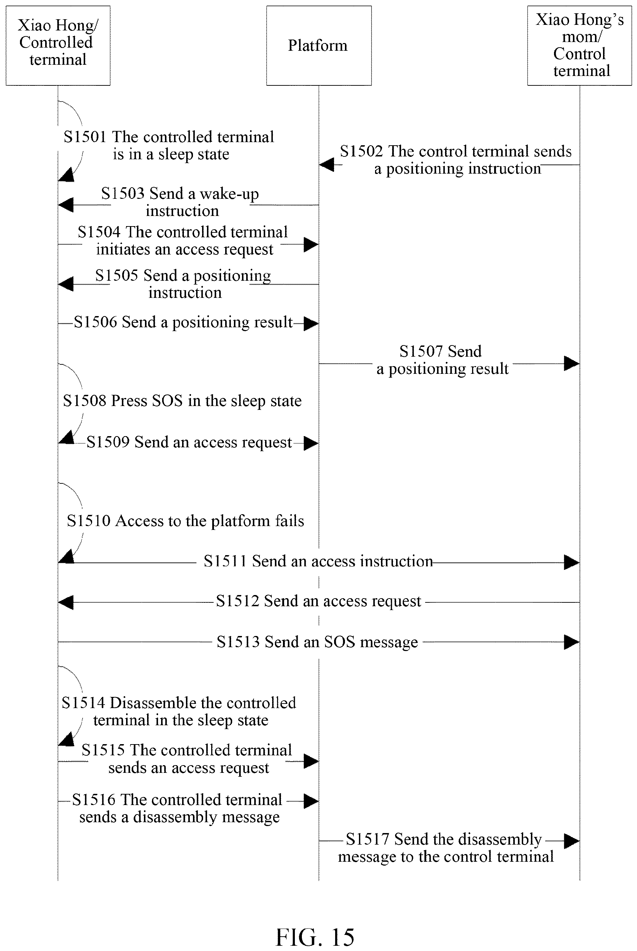

FIG. 15 illustrates a flowchart of a terminal control method according to an embodiment of the present invention. As illustrated in FIG. 15, the process of the terminal control method includes the following steps.

In step S1501, Xiao Hong puts on a controlled terminal on a hand and the controlled terminal is in a sleep state at school in the morning.

In step S1502, Xiao Hong's mom installs a remote control APP in a mobile phone, and her mom uses the APP to position the controlled terminal carried by Xiao Hong.

In step S1503, a platform receives a positioning request sent by the mobile phone of Xiao Hong's mom, the platform checks and finds that the controlled terminal is not online and the platform sends a wake-up message to the controlled terminal.

In step S1504, the controlled terminal put on by Xiao Hong initiates an access request to the platform according to the wake-up message.

In step S1505, the platform allows the controlled terminal carried by Xiao Hong to access and the platform sends a positioning instruction to the controlled terminal carried by Xiao Hong.

In step S1506, the controlled terminal carried by Xiao Hong receives the positioning instruction, performs positioning, and returns a positioning result to the platform after positioning.

In step S1507, the platform receives the location information returned by the controlled terminal carried by Xiao Hong and forwards the location information to the APP of the mobile phone of Xiao Hong's mom, and the APP of the mobile phone of Xiao Hong's mom displays the location of the controlled terminal carried by Xiao Hong.

In step S1508, in the afternoon, the controlled terminal carried by Xiao Hong is in a sleep state, the school temporarily adds extracurricular activities, the time to leave school in the afternoon will be 40 minutes later, and Xiao Hong presses an SOS call button of the controlled terminal and records voice information about that the time to leave school is delayed.

In step S1509, the controlled terminal carried by Xiao Hong sends an access request to the platform.

In step S1510, the controlled terminal carried by Xiao Hong fails to access the platform and no response message is received.

In step S1511, the controlled terminal carried by Xiao Hong sends an access instruction to the mobile phone of Xiao Hong's mom.

In step S1512, the APP of the mobile phone of Xiao Hong's mom acquires a service address of the instruction and initiates an access request to the controlled terminal carried by Xiao Hong.

In step S1513, the controlled terminal carried by Xiao Hong allows the APP of the mobile phone of Xiao Hong's mom to access and sends the voice record that the time to leave school is delayed to the APP of the mobile phone of Xiao Hong's mom, and Xiao Hong's mom plays the voice record information of Xiao Hong on the APP of the mobile phone.

In step S1514, Xiao Hong goes back home after school, and the controlled terminal carried by Xiao Hong is in a sleep state, Xiao Hong's mom helps Xiao Hong to take down the controlled terminal from the hand of Xiao Hong, and when the controlled terminal is taken down, the disassembly button must be touched and the controlled terminal is woken up.

In step S1515, the controlled terminal generates a disassembly message and sends an access request to the platform, and the platform allows the controlled terminal to access.

In step S1516, the controlled terminal sends the disassembly message to the platform, herein the message includes information such as time and geographical location of disassembly and so on.

In step S1517, the platform sends the disassembly message to the APP of the mobile phone of Xiao Hong's mom, and the APP of the mobile phone of Xiao Hong's mom displays that the time and geographical location at which the controlled terminal is taken down from the hand of Xiao Hong are consistent with the actual situation.

It needs to be stated that each of the above-mentioned modules may be implemented by means of software or hardware. The latter one may be implemented through but not limited to the following modes: the above-mentioned modules are all located in the same processor; or the above-mentioned modules are respectively located in a plurality of processors.

An embodiment of the present invention further provides a storage medium. In this embodiment, the above-mentioned storage medium may be configured to store program codes for executing the following steps.

In step S1, an access request, directly sent by a controlled terminal, for requesting for access is received.

In step S2, a connection with the controlled terminal is established according to the access request.

In step S3, communication with the controlled terminal is performed according to the established connection.

In this embodiment, the above-mentioned storage medium may include but not limited to various mediums such as USB flash disks, Read-Only Memories (ROMs), Random Access Memories (RAMs), mobile hard disks, magnetic disks or compact disks which can storage program codes.

In an exemplary embodiment, for the specific examples in this embodiment, a reference may be made to the examples described in the above-mentioned embodiments and alternative implementation modes, and thus the specific examples are not repetitively described here in this embodiment.

By adopting the solutions in the above-mentioned embodiments of the present invention, the following beneficial effects may be realized.

By adopting the method in the embodiment of the present invention, the controlled terminal may be woken up without depending on the platform and the risk that the terminal cannot be used is reduced; since the woken-up terminal of the present invention directly communicates with the mobile phone application, the deployment of the platform and the worries about user privacy leakage are decreased. Since the method in the embodiment of the present invention may not depend on the platform, the worries of users about privacy leakage can be decreased. The controlled terminal may turn on or off the voice play function and the demands of various scenarios can be satisfied. The controlled terminal is designed with one key and two concealed keys, the operation is simple and the functions are rich. Since inner and outer shell independent design is adopted, the shapes of the controlled terminal may be rich and diversified.

Obviously, one skilled in the art should understand that all modules or all steps of the present invention may be implemented by using general-purpose computing devices, they may be integrated in a single computing device or distributed on a network consisting of a plurality of computing devices. In an exemplary embodiment, they may be implemented by using program codes executable for computing devices, thus they may be stored in memory devices and executed by computing devices. Under certain circumstances, the illustrated or described steps may be executed according to a sequence different from the sequence here, or they may be respectively manufactured into individual integrated circuit modules, or a plurality of modules or steps thereof may be manufactured into a single integrated circuit module to implement. Therefore, the present invention is not limited to any specific combination of hardware and software.

The embodiments described above are just alternative embodiments of the present invention and are not used for limiting the present invention. For one skilled in the art, the present invention may have various modifications and variations. Any modification, equivalent replacement, improvement and the like made within the essence and rule of the present invention shall be still included in the protection scope of the present invention.

### Industrial Applicability

As described above, the terminal communication method and device, the control terminal and the controlled terminal provided by the embodiments of the present invention have the following beneficial effects: the problem that the control terminal cannot communicate with the controlled terminal under a situation that the background platform is abnormal in the related art is solved, and thus the effect that the control terminal and the controlled terminal can communicate with each other without the background platform is achieved.

## Claims

1. A terminal communication method, comprising:
receiving an access request, directly sent by a controlled terminal, for requesting for access;
establishing a connection with the controlled terminal according to the access request; and
communicating with the controlled terminal according to the established connection.

2. The method according to claim 1, wherein before the step of receiving an access request, directly sent by a controlled terminal, for requesting for access, the method further comprises:
directly sending a wake-up message for waking up the controlled terminal to the controlled terminal.

3. The method according to claim 2, wherein the step of directly sending a wake-up message for waking up the controlled terminal to the controlled terminal comprises:
directly sending the wake-up message to the controlled terminal by means of sending a short message to the controlled terminal.

4. The method according to claim 1, wherein the step of receiving an access request, directly sent by a controlled terminal, for requesting for access comprises:
receiving the access request directly sent by the controlled terminal by means of receiving a short message sent by the controlled terminal.

5. The method according to claim 1, wherein the step of establishing a connection with the controlled terminal according to the access request comprises:
performing an authentication on the access request;
under a situation that the authentication passes, sending an allowing message of allowing the access of the controlled terminal to the controlled terminal; and
connecting the controlled terminal according to a message fed back by the controlled terminal to the allowing message.

6. The method according to claim 1, wherein the step of communicating with the controlled terminal according to the established connection comprises:
receiving disassembly data sent by the controlled terminal, wherein the disassembly data comprises a state change type of the controlled terminal, time at which a state of the controlled terminal changes, and a place at which the state of the controlled terminal changes, and the state change type comprises disassembly of the controlled terminal.

7. The method according to claim 1, wherein, after the step of communicating with the controlled terminal according to the established connection, the method further comprises:
storing received data sent by the controlled terminal in a platform, wherein the platform is used for storing data.

8. A terminal communication method, comprising:
directly sending an access request for accessing a control terminal to the control terminal;
establishing a connection with the controlled terminal according to the access request; and
communicating with the control terminal according to the established connection.

9. The method according to claim 8, wherein before the step of directly sending an access request for accessing a control terminal to the control terminal, the method further comprises:
receiving a wake-up message directly sent by the control terminal; and
entering a working state from a sleep state according to the wake-up message.

10. The method according to claim 9, wherein the step of receiving a wake-up message directly sent by the control terminal comprises:
receiving the wake-up message directly sent by the control terminal by means of receiving a short message sent by the control terminal.

11. The method according to claim 8, wherein the step of directly sending an access request for accessing a control terminal to the control terminal comprises:
directly sending the access request to the control terminal by means of sending a short message to the control terminal.

12. The method according to claim 8, wherein the step of establishing a connection with the controlled terminal according to the access request comprises:
receiving an allowing message of allowing access sent by the control terminal according to the access request;
performing an authentication on the allowing message; and
under a situation that the authentication passes, accessing the control terminal.

13. The method according to claim 8, wherein the step of communicating with the control terminal according to the established connection comprises:
when a disassembly signal is received, sending disassembly data to the control terminal, wherein the disassembly data comprises a state change type, time at which a state changes and a place at which the state changes, and the state change type comprises disassembly of a controlled terminal.

14. A terminal communication device, comprising:
a first receiving module configured to receive an access request, directly sent by a controlled terminal, for requesting for access;
a first establishment module configured to establish a connection with the controlled terminal according to the access request; and
a first communication module configured to communicate with the controlled terminal according to the established connection.

15. The device according to claim 14, wherein the device further comprises:
a first sending module configured to directly send a wake-up message for waking up the controlled terminal to the controlled terminal.

16. The device according to claim 15, wherein the first sending module is configured to:
directly send the wake-up message to the controlled terminal by means of sending a short message to the controlled terminal.

17. The device according to claim 14, wherein the first receiving module is configured to:
receive the access request directly sent by the controlled terminal by means of receiving a short message sent by the controlled terminal.

18. The device according to claim 14, wherein the device further comprises:
a storage module configured to store received data sent by the controlled terminal in a platform, wherein the platform is used for storing data.

19. A control terminal, comprising the device according to any one of claims 14-18.

20. A terminal communication device, comprising:
a second sending module configured to directly send an access request for accessing a control terminal to the control terminal;
a second establishment module configured to establish a connection with the controlled terminal according to the access request; and
a second communication module configured to communicate with the control terminal according to the established connection.

21. The device according to claim 20, wherein the device further comprises:
a second receiving module configured to receive a wake-up message directly sent by the control terminal; and
a processing module configured to enter a working state from a sleep state according to the wake-up message.

22. The device according to claim 21, wherein the second receiving module is configured to:
receive the wake-up message directly sent by the control terminal by means of receiving a short message sent by the control terminal.

23. The device according to claim 20, wherein the second sending module is configured to:
directly send the access request to the control terminal by means of sending a short message to the control terminal.

24. A controlled terminal, comprising the device according to any one of claims 19-23.

25. The controlled terminal according to claim 24, wherein a voice button and/or a disassembly button are/is further provided in the controlled terminal, wherein the voice button is embedded into a core of the controlled terminal and engages with a key of the core of the controlled terminal, and the disassembly button is located between a shell of the controlled terminal and the core of the controlled terminal.
